Europäisches Patentamt

European Patent Office

Office européen des brevets

(11) Veröffentlichungsnummer: **0 416 352 A2**

# EUROPÄISCHE PATENTANMELDUNG

(21) Anmeldenummer: 90115843.6

(22) Anmeldetag: 18.08.90

(51) Int. Cl.⁵: **B29C 61/06**

(30) Priorität: 08.09.89 DE 3929859

(43) Veröffentlichungstag der Anmeldung:
13.03.91 Patentblatt 91/11

(84) Benannte Vertragsstaaten:
AT BE CH DE DK ES FR GB GR IT LI NL SE

(71) Anmelder: KABELMETAL ELECTRO GMBH
Kabelkamp 20 Postfach 260
W-3000 Hannover 1(DE)

(72) Erfinder: Marx, Karl-Heinz, Dipl.-Ing.
Zehntweg 25
W-3008 Garbsen 4(DE)

(54) Verfahren zur Herstellung von Schrumpfartikeln.

(57) Bei der Herstellung von faser- bzw. gewebeverstärkten Schrumpfartikeln wird auf ein extrudiertes Rohr ein Faden wendelartig aufgewickelt. Der Faden besteht aus Kunststoff und trägt vorzugsweise eine wendelartige Umspinnung aus bei Schrumpftemperatur hochzugfestem Material, wie z. B. Glasfiber. Auf das umwickelte erste Rohr wird ein weiteres Rohr extrudiert und mit dem ersten Rohr verbunden. Nach einer Vernetzung zumindest eines der Rohre wird das Rohr erwärmt, aufgeweitet und abgekühlt.

Die Erfindung betrifft ein Verfahren zum Herstellen von Schrumpfartikeln.

Schrumpfartikel werden in der Regel dadurch hergestellt, daß ein thermoplastischer Kunststoff chemisch oder physikalisch vernetzt, darauf über den Kristallitschmelzpunkt erwärmt wird, der Gegenstand in der gewünschten Richtung gereckt bzw. gedehnt und im gereckten bzw. gedehnten Zustand abgekühlt wird. Beim Wiedererwärmen schrumpfen diese Artikel auf die Abmessung vor dem Reck- oder Dehnvorgang zurück.

Solche Schrumpfartikel werden heutzutage für vielerlei Zwecke eingesetzt. Eines der Hauptanwendungsgebiete ist die Abdeckung von Verbindungen elektrischer Kabel oder Rohrleitungen.

Nachteilig ist, daß die Festigkeit insbesondere die Reißfestigkeit bei der Reck- bzw. Dehntemperatur sowie der annähernd gleich hohen Schrumpftemperatur sehr gering ist und bei Schrumpfartikeln durch Einwirkung von spitzen Gegenständen aber auch von scharfkantigen Übergängen die Gefahr des Einreißens besteht.

Zur Erhöhung der Reißfestigkeit von Schrumpfartikeln ist es bekannt, Fäden oder Fasern aus bei Schrumpftemperatur hochfestem Werkstoff in der Wandung des Schrumpfartikels einzubauen. Aus der EP-C-0 115 905 ist ein wärmerückstellbarer Textilstoff bekannt, der aus wärmerückstellbaren Fasern und quer dazu verlaufenden Glasfasern besteht. Dieser Textilstoff ist in einer Matrix aus Kunststoff eingebettet. Die Gefahr des Einreißens ist bei diesem Vorschlag dadurch eingeschränkt, daß nur die wärmerückstellbaren Fasern schrumpfen, und die Matrix nur mitgenommen wird. Die Glasfasern wirken nur quer zur Schrumpfrichtung.

Eine andere Lösung des eingangs genannten Problems zeigt die nicht vorveröffentlichte DE-OS 38 31 998. Dort wird ein Gewebe oder Geflecht aus Strängen in eine Kunststoffmatrix eingebaut, wobei die Stränge reckbar sind. Die Stränge bestehen aus einem zentralen Kunststoffaden mit einer wendelartigen Umspinnung aus einem hochfesten Faden z. B. einem Glasfaden. Beim Reckvorgang vergrößert sich die Schlaglänge des Glasfadens bei gleichzeitiger Verringerung der lichten Weite der Wendel. Die durch das wendelartige Aufwickeln vorhandene "Dehnungsreserve" kann bis zu 400% oder mehr betragen. Im Extremfall liegt ein gestreckter Glasfaden vor.

Das Geflecht besteht aus einer Vielzahl paralleler Stränge, die mit querverlaufenden Glasfäden verwebt oder verflochten sind. Beim Schrumpfen "zieht" hier nur die Matrix, während die Glasfäden als Verstärkung sowohl in Schrumpfrichtung als auch quer dazu wirken.

Der vorliegenden Erfindung liegt die Aufgabe zugrunde, ein Verfahren anzugeben, mit welchem mit Fasern verstärke Bänder bzw. Manschetten wesentlich preisgünstiger herstellbar sind. Darüberhinaus soll das Verfahren Möglichkeiten aufzeigen, auch andere Schrumpfartikel wie z. B. Rohre mit einer verstärkenden Einlage herzustellen.

Diese Aufgabe wird durch die Kombination folgender Merkmale gelöst:

a) es wird zunächst ein Rohr aus einem polymeren Werkstoff extrudiert

b) auf das extrudierte Rohr wird mindestens ein Strang aus einem polymeren Werkstoff wendelartig aufgewickelt bzw. werden mehrere Stränge wendelartig aufgewickelt oder aufgeflochten

c) auf die durch b) aufgebrachte Schicht wird ein weiteres Rohr aus einem polymeren Werkstoff extrudiert

d) zumindest eines der extrudierten Rohre wird vernetzt

e) das Gebilde wird über den Kristallitschmelzpunkt des vernetzten Rohres erwärmt, im erwärmten Zustand aufgeweitet und im aufgeweiteten Zustand abgekühlt.

Durch das erfindungsgemäße Verfahren kann auf ein gesondertes Herstellen des Gewebes oder Geflechtes verzichtet werden, da dieses beim Schritt b) direkt auf dem inneren Rohr erzeugt wird. Die Technik des Umspinnens bzw. Umwickelns bzw. Aufflechtens ist sowohl in der Kabeltechnik, als auch bei der Schlauchherstellung hinlänglich bekannt. Durch das gesonderte Aufwickeln des Stranges oder der Stränge auf das Innenrohr und das nachträgliche Extrudieren des Außenrohres entsteht zwar eine nahezu homogene Wand des Artikels, es wird jedoch vermutet, daß die erhöhte Reißfestigkeit aus Grenzflächeneffekten herrührt.

Insbesondere weist jeder Strang eine wendelartig verlaufende Umwicklung oder Umspinnung oder Umflechtung aus mindestens einem Faden aus im wesentlichen nicht reckbarem Werkstoff, wie z.B. Metall, Glas, Mineral, Baumwolle, Polyester, Aramid etc auf. Die Vernetzung nach Schritt d) ist vorteilhaft, um hohe Schrumpfraten von z. B. mehr als 100 % zu erzielen. Wird nur eines der Rohre vernetzt, wird bei einer guten Haftung der Rohre aneinander das andere Rohr beim Schrumpfen mitgenommen. Sinnvoll und vorteilhaft ist es, beide Rohre zu vernetzen, wobei es zweckmäßig sein kann, das äußere Rohr weniger stark zu vernetzen. Praktikabel ist ein Vernetzungsgrad von 25 bis 35 % für das Innenrohr und 5 -15 % für das Außenrohr.

Beim Reck- bzw. Aufweitvorgang wird beispielsweise im Innern des Rohres ein Überdruck erzeugt, und das Rohr gegen ein Kalibrierrohr geformt. Alternativ kann zwischen dem Kalibrierrohr und dem aufzuweitenden Rohling bzw. dem kontinuierlich zugeführten Rohr ein Unterdruck erzeugt werden, der das Rohr zum Anliegen an das Kalibrierrohr bringt. Wesentlich ist, daß das mit dem verstärkenden Gewebe bzw. Geflecht versehene Rohr die Aufweitung mitmacht, ohne daß die vom Material her nicht reckbaren Fäden reißen. Durch die Formgebung, d. h. das wendelartige Aufwickeln auf den Kunststoffaden, ist der Strang reckbar.

Das nach dem erfindungsgemäßen Verfahren hergestellte Produkt ist ein Rohr, welches wärmerückstellbar, d. h. schrumpfbar ist und innerhalb seiner Wandung ein Gewebe, Geflecht etc von hochfesten Fasern aufweist.

Nach einer besonders vorteilhaften Weiterbildung der Erfindung wird aus dem aufgeweiteten Rohr durch Längsschneiden ein gerecktes Band hergestellt. Auf diese Weise läßt sich ohne gesonderte Herstellung eines Verstärkungsgewebes ein gewebeverstärktes Band herstellen. Das Längsaufschneiden kann vor oder nach dem Aufweiten vorgenommen werden. Wird das Längsaufschneiden vor dem Aufweiten vorgenommen, kann das Band auf für Bänder üblichen Reckrahmen gereckt werden.

Wesentlich für die Erfindung ist, daß sich das innere Rohr und das äußere Rohr miteinander verbinden. Dazu ist es erforderlich, daß bei der Extrusion des äußeren

Rohres, die Kunststoffschmelze für das äußere Rohr mit dem Kunststoff des inneren Rohres verschweißt. Dies kann in besonders einfacher Weise dadurch erreicht werden, daß die durch das Umwickeln, Umspinnen bzw. Umflechten entstandenen Zwischenräume zwischen den Strängen bzw. den Wicklungen der Stränge mit Kunststoffpulver ausgefüllt werden. Das Kunststoffpulver besteht aus dem gleichen Werkstoff wie das innere und das äußere Rohr und sorgt somit für eine gute Verbindung und vermeidet Lufteinschlüsse.

Mit besonderem Vorteil werden zumindest zwei Stränge mit gegenläufiger Schlagrichtung auf das Kunststoffrohr aufgewickelt. Damit ergibt sich eine netzartige Verstärkungsschicht für das Rohr.

Nach einer besonders vorteilhaften Ausgestaltung der Erfindung werden sowohl das innere Rohr als auch das äußere Rohr und ggfs auch das Kunststoffpulver vernetzt. Hier bietet sich insbesondere die peroxidische Vernetzung oder andere chemische Vernetzungsarten an, die nach oder während des Extrusionsvorgangs für das äußere Rohr vorgenommen werden können. Durch die Vernetzung lassen sich höhere Schrumpfraten erzielen.

Wenn das äußere Rohr extrudiert wird, können vorteilhaft zwei oder mehrere radial nach außen weisende Stege gemeinsam mit dem Rohr extrudiert werden. Auf diese Weise lassen sich schrumpffähige Bänder herstellen, die an zwei gegenüberliegenden Längsrändern Stege aufweisen, über die nach dem Herumlegen des Bandes um ein Substrat eine C-förmige Verschlußschiene geschoben werden kann. Beim Umwickeln, Umspinnen bzw. Umflechten des Innenrohres werden zweckmäßigerweise eine Vielzahl von Fäden gleichmäßig über den Umfang des Rohres verteilt in Längsrichtung verlaufend eingefahren. Die Fäden bestehen aus einem im wesentlichen nicht reckbaren Material z. B. Glasfiber und dienen zur Erhöhung der Reißfestigkeit in Längsrichtung des Rohres bzw. quer zur Schrumpfrichtung. Werden zwei Fäden mit gegenläufiger Schlagrichtung auf das Rohr aufgewickelt, sollten die in Längsrichtung verlaufenden nicht reckbaren Fäden zwischen den einzelnen gegenläufigen Wickellagen eingefahren werden.

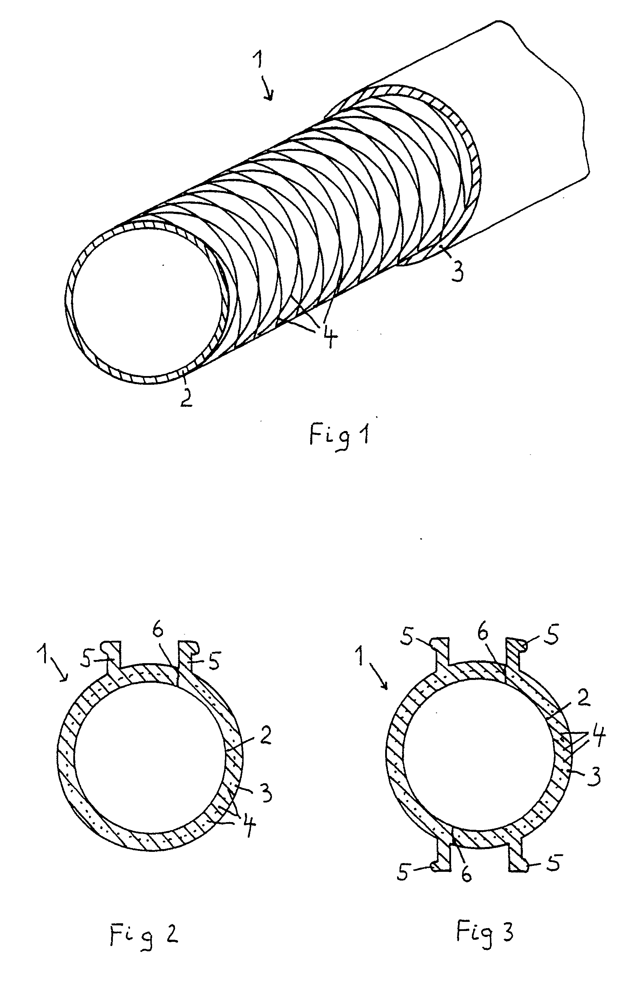

Die Erfindung ist an Hand der in den Figuren 1 bis 5 schematisch dargestellten Ausführungsbeispiele näher erläutert.

In Figur 1 ist ein Kunststoffrohr 1 dargestellt, welches aus einem inneren Kunststoffrohr 2 sowie einem äußeren Kunststoffrohr 3 besteht. Zwischen den Rohren 2 und 3 befindet sich eine Verstärkungslage aus mehreren Fäden 4, die mit gegenläufigem Schlag auf das innere Kunststoffrohr 2 aufgewickelt sind. Die Fäden 4 bestehen aus einem nicht näher bezeichneten Kunststoffaden, auf den ein Faden aus bei Schrumpftemperatur zugfesten Material wie z. B. Baumwolle, Glasfiber, Metall wendelartig aufgewickelt ist. Wie aus der älteren Anmeldung P 38 31 998.5 der Anmelderin bekannt ist, ist ein solcher Faden 4 dehnbar, wobei sich die Schlaglänge des zugfesten Umwickelfadens bei Verringerung des Durchmessers des Kunststoffadens vergrößert. Wird das Kunststoffrohr 1 aufgeweitet, macht also die Umwicklung aus den Fäden 4 diese Aufweitung mit. Die auf die Kunststoffäden aufgewickelten zugfesten Fäden bewirken eine höhere Reißfestigkeit des Kunststoffrohres 1, insbesondere bei Temperaturen oberhalb von 100 °C. Ein solches Kunststoffrohr bietet sich somit als Schrumpfschlauch an. Hierzu ist es sinnvoll, wenn der Kunststoff des, inneren und des äußeren Kunststoffrohres 2 und 3 vernetzt wird. Damit ein guter Verbund zwischen den Rohren 2 und 3 hergestellt wird, müssen diese im thermoplastischen Zustand vereinigt werden. Eine Vernetzung erfolgt danach. Zweckmäßig ist eine peroxidische Vernetzung, die nach der Extrusion des Außenrohres 3 durch weiteres Aufheizen des Verbundrohres durchgeführt wird. Nach der Vernetzung wird das Rohr 1 aufgeweitet z. B. durch Aufbringung von Innendruck und im aufgeweiteten Zustand abgekühlt. Beim Wiedererwärmen schrumpft das aufgeweitete Rohr wieder auf die ursprüngliche Abmessung zurück.

Wie aus den Figuren 2 und 3 hervorgeht, können gemeinsam mit dem äußeren Rohr 3 Stege 5 extrudiert werden. Diese Vorgehensweise ist sinnvoll, wenn z. B. schrumpfbare Manschetten hergestellt werden sollen, wie sie aus der DE-PS 15 25 815 bekannt sind. Das fertige Rohr 1 kann dann zwischen den Stegen 5 wie bei 6 angedeutet längs aufgetrennt werden, auf die gewünschte Länge geschnitten und auf für Manschetten verwendeten Reckrahmen gereckt werden. Die Fäden 4 verlaufen innerhalb der Wandung der Manschette unter einem Winkel zur Reckrichtung.

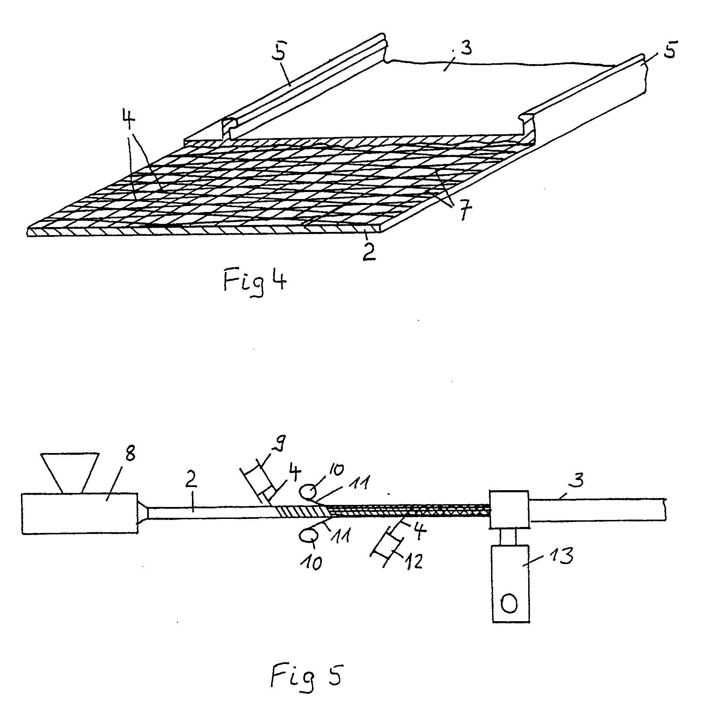

Die Figur 4 zeigt eine Manschette, die in der beschriebenen Weise hergestellt wurde. Zusätzlich zu den im wesentlichen in Schrumpf- bzw. Reckrichtung verlaufenden Fäden 4 sind noch eine Vielzahl von Fäden 7 vorgesehen, die in Längsrichtung des Rohres 1 bzw. parallel zu den Stegen 5 verlaufen. Diese Fäden 7 brauchen nicht reckbar zu sein und bestehen deshalb aus einen nicht reckbaren zugfesten Material, wie z. B. Baumwolle, Metall, Glasseide etc. Eine Manschette wie sie in Figur 4 dargestellt ist, kann um ein Substrat z. B. einen nicht dargestellten Kabelspleiß herumgelegt und wie in der DE-PS 15 25 815 beschrieben durch Überschieben einer C-förmigen Schiene über die Stege 5 an den Längsrändern verschlossen und anschließend erwärmt und zum Schrumpfen gebracht werden.

Die Figur 5 zeigt den schematischen Ablauf des Fertigungsverfahrens.

Zunächst wird mittels eines Extruders 8 das Innenrohr 2, welches vorteilhafterweise aus peroxidisch vernetzbaren Polyethylen besteht, hergestellt. Auf das Innenrohr 2 wird eine erste Lage aus den reckbaren Fäden 4 wendelartig aufgewickelt. Die Fäden 4 werden von Spulen 9 abgezogen, die das Rohr 2 umlaufen. Der Deutlichkeit halber ist nur eine Spule 9 dargestellt. Von einer Vielzahl von Spulen 10, von denen nur zwei dargestellt sind, werden Glasseidefäden 11, gezwirnt oder gefacht, abgezogen und gleichmäßig über den Umfang verteilt auf die erste Lage der Fäden 4 aufgelegt. Auf diese Lage wird eine weitere Lage von reckbaren Fäden 4 wendelartig aufgelegt und zwar mit gegenläufiger Schlagrichtung wie die Fäden 4 der ersten Lage. Auch die Fäden 4 der äußeren Lage werden von Vorratsspulen 12, von denen nur eine dargestellt ist, abgezogen. Mit einem Querextruder 13 wird das äußere Kunststoffrohr 3 extrudiert. Auch dieses Rohr 2 besteht aus einem Peroxide enthaltenden Polyethylen.

Die Zwischenräume zwischen den Fäden 4 bzw. den Fäden 11 können in nicht dargestellter Weise mit feinkörnigem Polyethylenpulver ausgefüllt werden, damit ein Verbund zwischen dem Innenrohr 2 und dem Außenrohr 3 hergestellt wird. Durch die Extrusionswärme beim Extrudieren des Rohres 3 schmilzt das Pulver und die Schmelze verschweißt mit dem Innenrohr 2 und dem Außenrohr 3.

Nach der Extrusion des Außenrohres 3 wird das fertige Rohr 1 bis zur Zerfallstemperatur des Peroxides erwärmt und dabei das Innenrohr 2, das Außenrohr 3 und ggfs. auch das Kunststoffpulver vernetzt. Der vernetzte Schlauch kann dann in an sich bekannter Weise aufgeweitet und im aufgeweiteten Zustand abgekühlt werden oder der Schlauch wird längsaufgetrennt und als Band gereckt und abgekühlt.

Die nach dem erfindungsgemäßen Verfahren hergestellten Schrumpfartikel haben eine wesentlich höhere Reißfestigkeit als Schrumpfartikel aus vernetztem Polyethylen ohne Verstärkungseinlage.

Der wesentliche Vorteil besteht jedoch darin, daß man eine gewebeartige Verstärkungslage, die reckbar ist, auf einem Innenrohr erzeugt, durch Extrusion eines Außenrohres innerhalb der Wandung einbaut und aus dem so hergestellten Rohr bandförmige Manschetten herausschneidet und in althergebrachter Manier reckt.

Insbesondere bei der Herstellung von Rohren mit einem großen Durchmesser kann es von Vorteil sein, die Fäden 4 nach Art einer SZ-Umseilung aufzubringen, d.h. die Schlagrichtung der Fäden 4 einer Lage wechselt nach einer bestimmten Anzahl von Umwicklungen. Die zweite Lage Fäden 4 sollte dann an jeder Stelle eine entgegengesetzte Schlagrichtung zur ersten Lage aufweisen. Bei diesem Vorgehen kann von feststehenden Vorratsspulen für die Fäden ausgegangen werden, d. h. die Vorratsspulen für die Fäden brauchen nicht um das Rohr umzulaufen.

## Ansprüche

1. Verfahren zur Herstellung von Schrumpfartikeln, gekennzeichnet durch die folgenden Merkmale
   a) es wird zunächst ein Rohr aus einem polymeren Werkstoff extrudiert
   b) auf das extrudierte Rohr wird mindestens ein Strang aus einem polymeren Werkstoff wendelartig aufgewickelt bzw. werden mehrere Stränge wendelartig aufgewickelt oder aufgeflochten
   c) auf die durch b) aufgebrachte Schicht wird ein weiteres Rohr aus einem polymeren Werkstoff extrudiert
   d) zumindest eines der extrudierten Rohre wird vernetzt
   e) das Gebilde wird über den Kristallitschmelzpunkt des vernetzten Rohres erwärmt, im erwärmten Zustand aufgeweitet und im aufgeweiteten Zustand abgekühlt.

2. Verfahren nach Anspruch 1, dadurch gekennzeichnet , daß ein Strang aufgewickelt wird, der eine wendelartig verlaufende Umwicklung, Umspinnung oder Umflechtung aus mindestens einem Faden aus im wesentlichen nicht reckbarem Werkstoff, wie z.B. Metall, Glas, Mineral, Baumwolle, temperaturbeständige Kunststoffe, wie Polyester oder Polyaramid etc. aufweist.

3. Verfahren nach Anspruch 1 oder 2, dadurch gekennzeichnet , daß aus dem aufgeweiteten Rohr durch Längsschneiden zumindest ein gerecktes Band hergestellt wird.

4. Verfahren nach einem der Ansprüche 1 bis 3, dadurch gekennzeichnet , daß das Längsaufschneiden vor dem Aufweiten des Rohres vorgenommen wird und das Band im ebenen Zustand gereckt wird.

5. Verfahren nach einem der Ansprüche 1 bis 4, dadurch gekennzeichnet , daß die durch das Umwickeln bzw. Umflechten entstandenen Zwischenräume zwischen den Strängen bzw. den Wicklungen der Stränge mit Kunststoffpulver ausgefüllt werden.

6. Verfahren nach einem der Ansprüche 1 bis 5, dadurch gekennzeichnet , daß zwei Stränge mit gegenläufiger Schlagrichtung auf das Kunststoffrohr aufgewickelt werden.

7. Verfahren nach einem der Ansprüche 1 bis 6, dadurch gekennzeichnet , daß sowohl das innere Rohr als auch das äußere Rohr und ggfs. auch das Kunststoffpulver vernetzt werden vorzugsweise durch peroxidische Vernetzung.

8. Verfahren nach einem der Ansprüche 1 bis 7, dadurch gekennzeichnet , daß beim Herstellen des äußeren Rohres zwei oder mehrere radial nach außen weisende Stege mit dem Rohr extrudiert werden.

9. Verfahren nach einem der Ansprüche 1 bis 8, dadurch gekennzeichnet , daß beim Umwickeln, Umspinnen bzw. Umflechten des Innenrohres eine Vielzahl von in Längsrichtung des Rohres gleichmäßig über dessen Umfang verteilt verlaufende Fäden aus im wesentlichen nicht reckbarem Werkstoff eingefahren werden.

10. Verfahren nach Anspruch 6 und 9, dadurch gekennzeichnet , daß die in Längsrichtung des Rohres verlaufenden Fäden zwischen den beiden mit gegenläufiger Schlagrichtung aufgebrachten Strängen aufgebracht werden.

Fig 1

Fig 2

Fig 3

Fig 4

Fig 5